# EUROPEAN PATENT APPLICATION

(11) **EP 4 773 255 A1**
(43) Date of publication of application: **08.07.2026**
(21) Application number: 24892934.1
(22) Date of filing: 23.08.2024
(51) Int. Cl.: H01M 4/66, H01M 4/13, H01M 10/0525

(54) **COMPOSITE CURRENT COLLECTOR, ELECTRODE SHEET, SECONDARY BATTERY, AND ELECTRIC APPARATUS**

(30) Priority: 24.11.2023 CN 202311597358
(71) Applicant: Contemporary Amperex Technology Co., Limited, Ningde, Fujian 352100 (CN)
(72) Inventor: LI, Mingling, Ningde, Fujian 352100 (CN); LIU, Xin, Ningde, Fujian 352100 (CN); HUANG, Qisen, Ningde, Fujian 352100 (CN); LIU, Xianghui, Ningde, Fujian 352100 (CN); CAI, Qiguo, Ningde, Fujian 352100 (CN); LI, Cheng, Ningde, Fujian 352100 (CN)
(74) Representative: Gong, Jinping
(86) International application number: PCT/CN2024/114337
(87) International publication number: WO 2025/107774

(57) **Abstract**

A composite current collector (3), an electrode plate, a secondary battery (1), and an electric apparatus (2) are provided. The composite current collector (3) includes a substrate layer (31), a first filler (32), a bonding layer (33), and a conductive layer (34). The bonding layer (33) is located between the substrate layer (31) and the conductive layer (34). One end of the first filler (32) is embedded in the substrate layer (31), the other end of the first filler (32) is embedded in the bonding layer (33), a hardness of the first filler (32) is greater than a hardness of the substrate layer (31), and the hardness of the first filler (32) is greater than a hardness of the bonding layer (33). In the composite current collector (3), by introducing the first filler (32) having a greater hardness than the substrate layer (31) and the bonding layer (33), and making one end of the first filler (32) embedded in the substrate layer (31) and the other end embedded in the bonding layer (33), the first filler (32) can serve as a point of force application between the substrate layer (31) and the bonding layer (33), which is conducive to improving the elastic modulus of the composite current collector (3) and reducing the risk of wrinkling during electrode plate processing.

## Description

### CROSS-REFERENCE TO RELATED APPLICATIONS

This application claims priority to Chinese Patent Application No. 2023115973582, filed on November 24, 2023 and entitled "COMPOSITE CURRENT COLLECTOR, ELECTRODE PLATE, SECONDARY BATTERY, AND ELECTRIC APPARATUS", which is incorporated herein by reference in its entirety.

### TECHNICAL FIELD

This application relates to the technical field of secondary batteries, in particular to a composite current collector, an electrode plate, a secondary battery, and an electric apparatus.

### BACKGROUND

The statements herein merely provide background information related to this application and do not necessarily constitute the prior art.

In a battery structure, a current collector is one of the important components, which has functions of supporting an active film layer, collecting current, and the like. The performance of the current collector has a significant influence on the performance of the electrode plate. Traditional current collectors have a low elastic modulus, and wrinkling is likely to occur when they are used for electrode plate processing.

### SUMMARY

A first aspect of this application provides a composite current collector including a substrate layer, a first filler, a bonding layer, and a conductive layer. The bonding layer is located between the substrate layer and the conductive layer, one end of the first filler is embedded in the substrate layer, the other end of the first filler is embedded in the bonding layer, a hardness of the first filler is greater than a hardness of the substrate layer, and the hardness of the first filler is greater than a hardness of the bonding layer.

In the above composite current collector, by introducing the first filler having a greater hardness than the substrate layer and the bonding layer, and making one end of the first filler embedded in the substrate layer and the other end embedded in the bonding layer, the first filler can serve as a point of force application between the substrate layer and the bonding layer, which is conducive to improving the elastic modulus of the composite current collector and reducing the risk of wrinkling during electrode plate processing.

In some embodiments, a depth of a portion of the first filler embedded in the substrate layer is 100 nm to 800 nm. The depth of the portion of the first filler embedded in the substrate layer in this range can make the substrate layer maintain good mechanical properties, which is conducive to promoting the improvement of the elastic modulus of the composite current collector. In addition, the depth of the portion of the first filler embedded in the substrate layer in this range can maintain good bonding force between the substrate layer and the bonding layer, which is conducive to making the composite current collector maintain good structural stability.

In some embodiments, multiple first fillers are provided, and the multiple first fillers are spaced apart. Optionally, a spacing between adjacent first fillers is 5 mm to 50 mm. In this way, the first filler can have an appropriate distribution density to more fully exert the role of the first filler, thereby making the composite current collector maintain good elastic modulus, strength, and other mechanical properties.

In some embodiments, Dᵥ50 of the first filler is 150 nm to 1500 nm. The Dᵥ50 of the first filler in this range can make the substrate layer and the bonding layer maintain a good riveting effect, promote the improvement of the bonding force between the substrate layer and the bonding layer, and further promote the composite current collector to maintain good structural stability. Optionally, the Dᵥ50 of the first filler is 200 nm to 1000 nm.

In some embodiments, the first filler includes at least one of alumina, silicon carbide, silicon nitride, silicon oxide, calcium oxide, boehmite, titanium dioxide, zirconium dioxide, magnesium oxide, zinc oxide, barium sulfate, boron carbide, and a first flame-retardant filler. In this case, the first filler has an appropriate hardness, which is conducive to promoting the improvement of the elastic modulus of the composite current collector. In addition, when the first filler includes the first flame-retardant filler, a flame-retardant effect of the composite current collector can be improved, and after the composite current collector is applied to a battery, the risk of thermal runaway such as fire or explosion of the battery can be reduced. Optionally, the first flame-retardant filler includes at least one of sodium chloride, sodium acetate, zinc borate, ammonium molybdate, zirconium phosphate, and antimony oxide.

In some embodiments, the composite current collector further includes a second filler, the second filler is located inside the bonding layer, a hardness of the second filler is greater than the hardness of the substrate layer, the hardness of the second filler is greater than the hardness of the bonding layer, and Dᵥ50 of the second filler is less than the Dᵥ50 of the first filler. By cooperation of the first filler and the second filler with different particle sizes, more fillers can be introduced into the composite current collector, further promoting the improvement of the elastic modulus of the composite current collector. In addition, when the composite current collector further includes the second filler, the second filler can interact with the first filler, further promoting the riveting effect between the substrate layer and the bonding layer, thereby further improving the bonding force between the substrate layer and the bonding layer. Optionally, the Dᵥ50 of the second filler is 50 nm to 150 nm.

In some embodiments, a mass ratio of the second filler to the first filler is (20 to 50):(50 to 80). In this case, the first filler and the second filler have an appropriate ratio, which can maintain good bonding force between the substrate layer and the bonding layer on the basis of improving the elastic modulus of the composite current collector.

In some embodiments, the second filler includes at least one of alumina, silicon carbide, silicon nitride, silicon oxide, calcium oxide, boehmite, titanium dioxide, zirconium dioxide, magnesium oxide, zinc oxide, barium sulfate, boron carbide, and a second flame-retardant filler. The second filler has an appropriate hardness, which is conducive to promoting the improvement of the elastic modulus of the composite current collector. In addition, when the second filler includes the second flame-retardant filler, a flame-retardant effect of the composite current collector can be improved, and after the composite current collector is applied to a battery, the risk of thermal runaway such as fire or explosion of the battery can be reduced.

In some embodiments, a mass percentage of the second flame-retardant filler in the second filler is 30% to 50%. The mass percentage of the second flame-retardant filler in this range can further improve the flame-retardant effect of the composite current collector on the basis of making the composite current collector have a good elastic modulus. Optionally, the second flame-retardant filler includes at least one of sodium chloride, sodium acetate, zinc borate, ammonium molybdate, zirconium phosphate, and antimony oxide.

In some embodiments, the bonding layer includes a binder. Optionally, the binder includes one or more of isocyanate, polyester polyol, polyurethane, epoxy resin, polyacrylate, polyvinyl acetate, unsaturated polyester, phenolic resin, urea-formaldehyde resin, modified polyolefin resin, silicone resin, ethylene-acrylic acid copolymer, ethylene-vinyl acetate copolymer, ethylene-vinyl alcohol copolymer, acrylic resin, polycarbonate, and polyamide.

In some embodiments, the substrate layer is provided with a hole channel, and the bonding layer is embedded in the hole channel. By the design of the bonding layer embedded in the hole channel, the bonding force between the bonding layer and the substrate layer can be further improved, promoting the composite current collector to maintain good structural stability.

In some embodiments, a hole diameter of the hole channel is 30 µm to 500 µm. The hole diameter of the hole channel in this range can make the substrate layer maintain good integrity on the basis of improving the bonding force between the bonding layer and the substrate layer by the bonding layer embedded in the hole channel, make the substrate layer maintain stable intrinsic properties, and thus make the substrate layer maintain good mechanical properties.

In some embodiments, multiple hole channels are provided, and the multiple hole channels are spaced apart. The design of the multiple hole channels is more conducive to promoting the improvement of the bonding force between the substrate layer and the bonding layer, thereby making the composite current collector maintain good structural stability.

In some embodiments, a spacing between adjacent hole channels is 5 mm to 50 mm. The spacing between adjacent hole channels in this range can make the substrate layer maintain stable intrinsic properties on the basis of providing an appropriate number of hole channels.

In some embodiments, the hole channels include at least one of through-hole channels and blind-hole channels. Optionally, a depth of the blind-hole channel is 50 nm to 1200 nm. The depth of the blind-hole channel in this range can provide a good embedding effect, which is conducive to improving the bonding force between the bonding layer and the substrate layer.

In some embodiments, the composite current collector further includes a passivation layer, and the passivation layer is located on a surface of the conductive layer. The passivation layer can protect the conductive layer, reduce corrosion of an electrolyte to the conductive layer, and is conducive to improving the structural stability of the composite current collector. Optionally, the passivation layer includes at least one of chromate, phosphate, alumina, silicon dioxide, and silicon nitride.

In some embodiments, a thickness of the substrate layer is 2 µm to 15 µm. The thickness of the substrate layer in this range can make the overall composite current collector maintain an appropriate thickness on the basis of providing good support.

In some embodiments, a thickness of the bonding layer is 0.5 µm to 3 µm. The thickness of the bonding layer in this range can make the overall composite current collector maintain an appropriate thickness on the basis of providing a good bonding effect.

In some embodiments, a thickness of the conductive layer is 0.5 µm to 5 µm. The thickness of the conductive layer in this range can make the composite current collector maintain an appropriate weight and thickness on the basis of providing appropriate conduction.

In some embodiments, an elastic modulus of the composite current collector is 7.2 GPa to 9.0 GPa. The elastic modulus of the composite current collector in this range can reduce the risk of wrinkling during processing.

A second aspect of this application provides an electrode plate including the composite current collector.

A third aspect of this application provides a secondary battery including the electrode plate.

A fourth aspect of this application provides an electric apparatus including at least one of the composite current collector, the electrode plate, and the secondary battery.

### BRIEF DESCRIPTION OF DRAWINGS

To better describe and illustrate the embodiments or examples provided by this application, reference may be made to one or more drawings. The additional details or examples used to describe the drawings should not be considered as limiting the scope of any of the disclosed application, the currently described embodiments or examples, or these best modes of these applications as currently understood. Moreover, identical reference signs denote identical components throughout all drawings. In the drawings:
FIG. 1 is a schematic diagram of a composite current collector according to an embodiment of this application.
FIG. 2 is a schematic diagram of a composite current collector according to another embodiment of this application.
FIG. 3 is a schematic diagram of a secondary battery according to an embodiment of this application.
FIG. 4 is an exploded view of the secondary battery according to an embodiment of this application shown in FIG. 3.
FIG. 5 is a schematic diagram of an electric apparatus using a secondary battery as a power source according to an embodiment of this application.

### Description of reference signs:

1. secondary battery; 11. shell; 12. electrode assembly; 13. cover plate; 2. electric apparatus; 3. composite current collector; 31. substrate layer; 311. hole channel; 32. first filler; 33. bonding layer; 34. conductive layer; 35. second filler; and 351. second flame-retardant filler.

### DESCRIPTION OF EMBODIMENTS

To facilitate understanding of this application, a more comprehensive description of this application is provided below with reference to the relevant drawings. Preferred embodiments of this application are provided in the drawings. However, this application may be implemented in many different forms and is not limited to the embodiments described herein. On the contrary, the purpose of providing these embodiments is to make the understanding of the disclosure of this application more thorough and comprehensive.

Unless otherwise defined, all technical and scientific terms used herein have the same meaning as commonly understood by those skilled in the technical field of this application. The terms used in the specification of this application are for the purpose of describing specific embodiments only and are not intended to limit this application. The term "and/or" used herein includes any and all combinations of one or more of the associated listed items.

The "range" disclosed in this application may be defined in the form of a lower limit and an upper limit, where a given range is defined by selecting a lower limit and an upper limit, and the selected lower limit and upper limit define the boundaries of a particular range. Ranges defined in this manner may include or exclude endpoints, where either endpoint may be independently included or excluded, and any combination may be made, that is, any lower limit may be combined with any upper limit to form a range. For example, if ranges of 60 to 120 and 80 to 110 are listed for a specific parameter, it is understood that ranges of 60 to 110 and 80 to 120 are also contemplated. Additionally, if minimum range values of 1 and 2 are listed, and if maximum range values of 3, 4, and 5 are listed, the following ranges are all contemplated: 1 to 3, 1 to 4, 1 to 5, 2 to 3, 2 to 4, and 2 to 5. In this application, unless otherwise specified, the numerical range "a to b" represents an abbreviated representation of a combination of any real numbers between a and b, where both a and b are real numbers. For example, the numerical range "0 to 5" means that all real numbers between "0 to 5" have been listed herein, and "0 to 5" is merely an abbreviated representation of a combination of these numbers. Additionally, when a parameter is expressed as an integer greater than or equal to 2, it is equivalent to listing that the parameter is, for example, an integer 2, 3, 4, 5, 6, 7, 8, 9, 10, 11, 12, or the like. For example, when a parameter is expressed as an integer selected from "2 to 10", it is equivalent to listing the integers 2, 3, 4, 5, 6, 7, 8, 9, and 10.

In this application, terms such as "multiple" and "various", unless specifically limited, refer to a quantity greater than 2 or equal to 2. For example, "one or more" indicates one, two, or more.

All embodiments and optional embodiments of this application may be combined with each other to form new technical solutions unless otherwise specified.

References to "embodiment" herein mean that a particular feature, structure, or characteristic described in connection with the embodiment may be included in at least one embodiment or implementation of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments. The term "implementation" mentioned herein has a similar understanding.

Those skilled in the art can understand that in the methods of various embodiments or examples, the order in which the steps are written does not imply a strict execution order that imposes any limitation on the implementation process; and the specific execution order of the steps should be determined by their functions and possible inherent logic. Unless otherwise specified, all steps of this application may be performed sequentially or randomly, and performed sequentially in some embodiments. For example, the method includes steps (a) and (b), indicating that the method may include steps (a) and (b) performed sequentially, or steps (b) and (a) performed sequentially. For example, if it is mentioned that the method may further include step (c), it means that step (c) may be added to the method in any order, for example, the method may include steps (a), (b), and (c), or steps (a), (c), and (b), or steps (c), (a), and (b), or the like.

In this application, unless otherwise specified, open-ended technical features or solutions described by words such as "contain", "include", or "comprise" do not exclude additional members beyond the listed members and may be regarded as providing both closed features or solutions including the listed members and open features or solutions including additional members beyond the listed members. For example, when A includes a1, a2, and a3, unless otherwise specified, A may include additional members or may not include additional members, which may be regarded as providing both the feature or solution "A includes a1, a2, and a3" and the feature or solution "A includes not only a1, a2, and a3 but also other members".

In this application, unless otherwise specified, A (such as B) indicates that B is a non-limiting example of A, and it can be understood that A is not limited to B.

In this application, "optionally", "optional", and "selectable" means that something may or may not be present, that is, it refers to either of two parallel options of "present" or "absent". If "selectable" appears in multiple places in a technical solution, unless otherwise specified and there is no contradiction or mutual constraint, each "selectable" is independent.

One embodiment of this application provides a composite current collector. The composite current collector includes a substrate layer, a first filler, a bonding layer, and a conductive layer. The bonding layer is located between the substrate layer and the conductive layer, one end of the first filler is embedded in the substrate layer, the other end of the first filler is embedded in the bonding layer, a hardness of the first filler is greater than a hardness of the substrate layer, and the hardness of the first filler is greater than a hardness of the bonding layer.

In the composite current collector of this embodiment, by introducing the first filler having a greater hardness than the substrate layer and the bonding layer, and making one end of the first filler embedded in the substrate layer and the other end embedded in the bonding layer, the first filler can serve as a point of force application between the substrate layer and the bonding layer, which is conducive to improving the elastic modulus of the composite current collector and reducing the risk of wrinkling during electrode plate processing.

In addition, one end of the first filler is embedded in the substrate layer, and the other end is embedded in the bonding layer, so that a riveted structure can be formed among the substrate layer, the first filler, and the bonding layer, which is conducive to improving the bonding force between the bonding layer and the substrate layer and improving the structural stability of the composite current collector.

It can be understood that the hardness in this application refers to Vickers hardness.

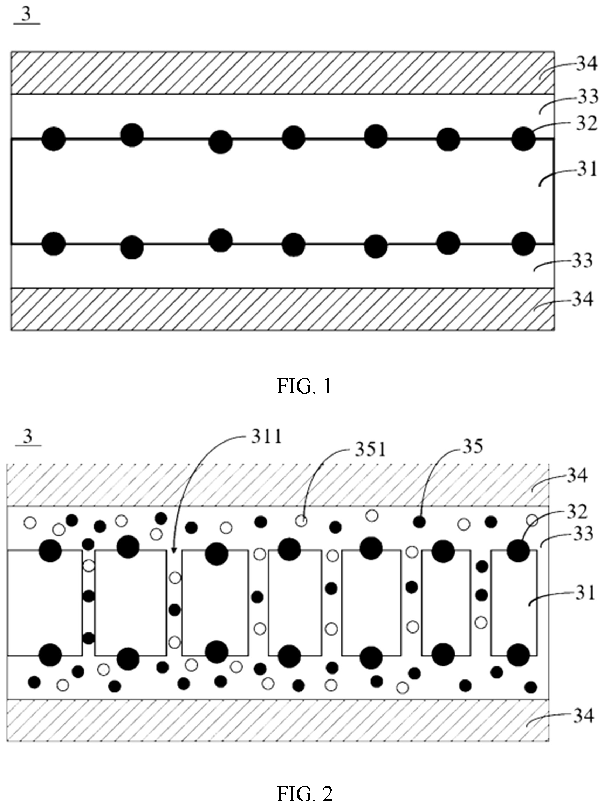

As an illustration of the composite current collector structure, reference is made to FIG. 1, which shows a composite current collector 3. The composite current collector 3 includes a substrate layer 31, a first filler 32, a bonding layer 33, and a conductive layer 34. The bonding layer 33 is located between the substrate layer 31 and the conductive layer 34, one end of the first filler 32 is embedded in the substrate layer 31, and the other end of the first filler 32 is embedded in the bonding layer 33. A hardness of the first filler 32 is greater than a hardness of the substrate layer 31, and the hardness of the first filler 32 is greater than a hardness of the bonding layer 33.

It can be understood that, during preparation of the composite current collector, a surface of the substrate layer may be thermally treated, so that the surface of the substrate layer is softened or molten, then the first filler is transferred to the thermally treated surface of the substrate layer, and a pressure is applied to embed one end of the first filler into the substrate layer, with the other end of the first filler being exposed. After one end of the first filler is embedded in the substrate layer, a bonding layer slurry may be transferred on the surface of the substrate layer, and the conductive layer is transferred to a surface of the slurry. After the slurry is cured, the bonding layer is formed. At that time, the other end of the first filler may be embedded in the bonding layer, and the conductive layer and the bonding layer are composited to form the composite current collector.

In some embodiments, a depth of a portion of the first filler embedded in the substrate layer is 100 nanometers (nm) to 800 nm. The depth of the portion of the first filler embedded in the substrate layer in this range can make the substrate layer maintain good mechanical properties, which is conducive to promoting the improvement of the elastic modulus of the composite current collector. In addition, the depth of the portion of the first filler embedded in the substrate layer in this range can maintain good bonding force between the substrate layer and the bonding layer, which is conducive to making the composite current collector maintain good structural stability.

In some embodiments, Dᵥ50 of the first filler is 150 nm to 1500 nm. The Dᵥ50 of the first filler in this range can make the substrate layer and the bonding layer maintain a good riveting effect, promote the improvement of the bonding force between the substrate layer and the bonding layer, and further promote the composite current collector to maintain good structural stability. Optionally, the Dᵥ50 of the first filler may be 150 nm, 200 nm, 300 nm, 400 nm, 500 nm, 600 nm, 700 nm, 800 nm, 900 nm, 1000 nm, 1100 nm, 1200 nm, 1300 nm, 1400 nm, 1500 nm, or the like. Further optionally, the Dᵥ50 of the first filler is 200 nm to 1000 nm. Still further optionally, the first filler is granular.

It can be understood that, in this application, Dᵥ50 refers to a particle size at which the cumulative particle size distribution reaches 50% in a volume-based cumulative distribution curve, physically meaning that particles less than (or greater than) this particle size account for 50%. In an example, Dᵥ50 can be obtained from a particle size distribution curve measured using a laser diffraction particle size analyzer Mastersizer 3000 according to the GB/T 19077-2016 test method.

In some embodiments, multiple first fillers are provided, and the multiple first fillers are spaced apart. Optionally, a spacing between adjacent first fillers is 5 millimeters (mm) to 50 mm. In this case, the first filler can have an appropriate distribution density to more fully exert the role of the first filler, thereby making the composite current collector maintain good elastic modulus, strength, and other mechanical properties. Optionally, the spacing between adjacent first fillers may be 5 mm, 10 mm, 15 mm, 20 mm, 25 mm, 30 mm, 35 mm, 40 mm, 45 mm, 50 mm, or the like.

In an optional example of the first filler, the first filler includes at least one of alumina, silicon carbide, silicon nitride, silicon oxide, calcium oxide, boehmite, titanium dioxide, zirconium dioxide, magnesium oxide, zinc oxide, barium sulfate, boron carbide, and a first flame-retardant filler. In this case, the first filler has an appropriate hardness, which is conducive to promoting the improvement of the elastic modulus of the composite current collector. In addition, when the first filler includes the first flame-retardant filler, the flame-retardant effect of the composite current collector can be improved, and after the composite current collector is applied to a battery, the risk of thermal runaway such as fire or explosion of the battery can be reduced. In an optional example of the first flame-retardant filler, the first flame-retardant filler includes at least one of sodium chloride, sodium acetate, zinc borate, ammonium molybdate, zirconium phosphate, and antimony oxide.

In some embodiments, the composite current collector further includes a second filler. The second filler is located inside the bonding layer. A hardness of the second filler is greater than the hardness of the substrate layer, the hardness of the second filler is greater than the hardness of the bonding layer, and Dᵥ50 of the second filler is less than the Dᵥ50 of the first filler. By cooperation of the first filler and the second filler with different particle sizes, more fillers can be introduced into the composite current collector, further promoting the improvement of the elastic modulus of the composite current collector. In addition, when the composite current collector further includes the second filler, the second filler can interact with the first filler, further promoting the riveting effect between the substrate layer and the bonding layer, thereby further improving the bonding force between the substrate layer and the bonding layer.

In some embodiments, the Dᵥ50 of the second filler is 50 nm to 150 nm. Optionally, the Dᵥ50 of the second filler may be 145 nm, 140 nm, 130 nm, 120 nm, 110 nm, 100 nm, 90 nm, 80 nm, 70 nm, 60 nm, 50 nm, or the like.

In some embodiments, a mass ratio of the second filler to the first filler is (20 to 50):(50 to 80). In this case, the first filler and the second filler have an appropriate ratio, which can maintain good bonding force between the substrate layer and the bonding layer on the basis of improving the elastic modulus of the composite current collector. Optionally, the mass ratio of the second filler to the first filler may be 20:80, 30:70, 40:60, 50:50, or the like. Further optionally, in terms of a mass percentage based on a total mass of the first filler and the second filler, the mass percentage of the second filler is 20% to 50%. Further optionally, in terms of the mass percentage of the total mass of the first filler and the second filler, the mass percentage of the second filler may be 20%, 30%, 40%, 50%, or the like.

In some embodiments, the second filler includes at least one of alumina, silicon carbide, silicon nitride, silicon oxide, calcium oxide, boehmite, titanium dioxide, zirconium dioxide, magnesium oxide, zinc oxide, barium sulfate, boron carbide, and a second flame-retardant filler. In this case, the second filler has an appropriate hardness, which is conducive to promoting the improvement of the elastic modulus of the composite current collector. In addition, when the second filler includes the second flame-retardant filler, the flame-retardant effect of the composite current collector can be improved, and after the composite current collector is applied to a battery, the risk of thermal runaway such as fire or explosion of the battery can be reduced.

Optionally, a mass percentage of the second flame-retardant filler in the second filler is 30% to 50%. The mass percentage of the second flame-retardant filler in this range can further improve the flame-retardant effect of the composite current collector on the basis of making the composite current collector have a good elastic modulus. Further optionally, the mass percentage of the second flame-retardant filler in the second filler may be 30%, 32%, 35%, 38%, 40%, 42%, 45%, 48%, 50%, or the like. Still further optionally, the second flame-retardant filler includes at least one of sodium chloride, sodium acetate, zinc borate, ammonium molybdate, zirconium phosphate, and antimony oxide.

It can be understood that the bonding layer includes a binder. Optionally, the binder includes one or more of isocyanate, polyester polyol, polyurethane, epoxy resin, polyacrylate, polyvinyl acetate, unsaturated polyester, phenolic resin, urea-formaldehyde resin, modified polyolefin resin, silicone resin, ethylene-acrylic acid copolymer, ethylene-vinyl acetate copolymer, ethylene-vinyl alcohol copolymer, acrylic resin, polycarbonate, and polyamide. Optionally, the isocyanate includes a polyfunctional isocyanate. Optionally, the bonding layer includes one or more of a composition of a polyfunctional isocyanate and a polyester polyol, and polyurethane. Optionally, the polyurethane includes one or more of thermoplastic polyurethane and reactive polyurethane.

In some embodiments, a thickness of the bonding layer is 0.5 micrometer (µm) to 3 µm. The thickness of the bonding layer in this range can make the overall composite current collector maintain an appropriate thickness on the basis of providing a good bonding effect. Optionally, the thickness of the bonding layer may be 0.5 µm, 0.8 µm, 1 µm, 1.2 µm, 1.5 µm, 1.8 µm, 2 µm, 2.2 µm, 2.5 µm, 2.8 µm, 3 µm, or the like. It can be understood that the thickness of the bonding layer refers to the thickness of the bonding layer located between the conductive layer and the substrate layer.

In some embodiments, the substrate layer is provided with a hole channel, and the bonding layer is embedded in the hole channel. By the design of the bonding layer embedded in the hole channel, the bonding force between the bonding layer and the substrate layer can be further improved, promoting the composite current collector to maintain good structural stability. It can be understood that the bonding layer being embedded in the hole channel means that a portion of the bonding layer is embedded in the hole channel, that is, a portion of the bonding layer extends into the hole channel. Optionally, the portion of the bonding layer extending into the hole channel fully fills the hole channel. It can also be understood that when the bonding layer includes the second filler, the portion of the bonding layer embedded in the hole channel also includes the second filler.

In some embodiments, a hole diameter of the hole channel is 30 µm to 500 µm. The hole diameter of the hole channel in this range can make the substrate layer maintain good integrity on the basis of improving the bonding force between the bonding layer and the substrate layer by the bonding layer embedded in the hole channel, make the substrate layer maintain stable intrinsic properties, and thus further make the substrate layer maintain good mechanical properties. Optionally, the hole diameter of the hole channel may be 30 µm, 40 µm, 50 µm, 80 µm, 100 µm, 150 µm, 200 µm, 300 µm, 400 µm, 500 µm, or the like.

Optionally, the shape of a cross section of the hole channel includes at least one of a circular shape, an elliptical shape, and a polygonal shape. It can be understood that the cross section of the hole channel refers to a section perpendicular to a thickness direction of the substrate layer. It can also be understood that when the shape of the cross section of the hole channel is circular, the hole diameter of the hole channel refers to a diameter of the circle. When the shape of the cross section of the hole channel is elliptical, the hole diameter of the hole channel refers to a length of the major axis of the ellipse. When the shape of the cross section of the hole channel is polygonal, the hole diameter of the hole channel refers to a length of the longest side of the polygon.

In some embodiments, multiple hole channels are provided, and the multiple hole channels are spaced apart. The design of the multiple hole channels is more conducive to promoting the improvement of the bonding force between the substrate layer and the bonding layer, thereby making the composite current collector maintain good structural stability. Optionally, a spacing between adjacent hole channels is 5 mm to 50 mm. The spacing between adjacent hole channels in this range can make the substrate layer maintain stable intrinsic properties on the basis of providing an appropriate number of hole channels. It can be understood that the spacing between adjacent hole channels refers to a distance between the centers of the adjacent hole channels. Optionally, the spacing between adjacent hole channels may be 5 mm, 10 mm, 15 mm, 20 mm, 25 mm, 30 mm, 35 mm, 40 mm, 45 mm, 50 mm, or the like.

In some embodiments, the hole channels include at least one of through-hole channels and blind-hole channels. It can be understood that a through-hole channel refers to a hole channel that extends through the substrate layer in the thickness direction of the substrate layer. The provision of the through-hole channels may, on the one hand, facilitate the embedding of the bonding layer to improve the bonding force between the bonding layer and the substrate layer. On the other hand, the through-hole channels can serve as exhaust hole channels, which is conducive to discharging gases that may be generated during preparation of the composite current collector. It can be understood that a blind-hole channel refers to a hole channel that does not extend through the substrate layer in the thickness direction of the substrate layer. Optionally, an opening of the blind-hole channel faces the bonding layer. The opening of the blind-hole channel facing the bonding layer may facilitate the embedding of the bonding layer to improve the bonding force between the bonding layer and the substrate layer. It can also be understood that hole channels can be prepared on the substrate layer by methods such as laser drilling, etching drilling, and hot-melt drilling.

Optionally, a depth of the blind-hole channel is 50 nm to 1200 nm. The depth of the blind-hole channel in this range can provide a good embedding effect, which is conducive to improving the bonding force between the bonding layer and the substrate layer. Optionally, the depth of the blind-hole channel may be 80 nm, 100 nm, 200 nm, 300 nm, 400 nm, 500 nm, 600 nm, 700 nm, 800 nm, 900 nm, 1000 nm, 1100 nm, or the like.

Reference is made to FIG. 2, which is a schematic diagram of a composite current collector according to an embodiment of this application. The composite current collector 3 includes a substrate layer 31, a first filler 32, a second filler 35, a bonding layer 33, and a conductive layer 34. The bonding layer 33 is located between the substrate layer 31 and the conductive layer 34, one end of the first filler 32 is embedded in the substrate layer 31, and the other end of the first filler 32 is embedded in the bonding layer 33. A hardness of the first filler 32 is greater than a hardness of the substrate layer 31, and the hardness of the first filler 32 is greater than a hardness of the bonding layer 33. The second filler 35 is located inside the bonding layer 33. Dᵥ50 of the second filler 35 is less than Dᵥ50 of the first filler 32. The second filler 35 includes a second flame-retardant filler 351. The substrate layer 31 is provided with a hole channel 311, and the bonding layer 33 is embedded in the hole channel 311. The second filler 35 is distributed in the bonding layer 33 embedded in the hole channel 311 of the substrate layer 31. In the embodiment shown in FIG. 2, the hole channel 311 is a through-hole channel.

In some embodiments, the composite current collector further includes a passivation layer, and the passivation layer is provided on a surface of the conductive layer. Optionally, the passivation layer includes at least one of chromate, phosphate, alumina, silicon dioxide, and silicon nitride. The passivation layer can protect the conductive layer, reduce corrosion of an electrolyte to the conductive layer, and is conducive to improving the structural stability of the composite current collector. Optionally, the passivation layer is located between the conductive layer and the bonding layer. The provision of the passivation layer can maintain a good bonding effect between the conductive layer and the bonding layer after the electrolyte infiltrates the composite current collector.

In some embodiments, a thickness of the substrate layer is 2 µm to 15 µm. The thickness of the substrate layer in this range can make the overall composite current collector maintain an appropriate thickness on the basis of providing good support. Optionally, the thickness of the substrate layer may be 2 µm, 3 µm, 4 µm, 5 µm, 6 µm, 7 µm, 8 µm, 9 µm, 10 µm, 11 µm, 12 µm, 13 µm, 14 µm, 15 µm, or the like. Optionally, the substrate layer includes one or more of polyamide, polyimide, polyethylene terephthalate, polybutylene terephthalate, polyethylene naphthalate, polycarbonate, polyethylene, polypropylene, polyisobutylene, acrylonitrile-butadiene-styrene copolymer, polyvinyl alcohol, polystyrene, polyvinyl chloride, polyvinylidene fluoride, polytetrafluoroethylene, sodium polystyrene sulfonate, polyacetylene, silicone rubber, polyoxymethylene, polyphenylene oxide, polyphenylene sulfide, polyethylene glycol, polysulfide nitride polymer materials, polyphenyl, polypyrrole, polyaniline, polythiophene, polypyridine, cellulose, starch, protein, epoxy resin, phenolic resin, their derivatives, their cross-linked products, and their copolymers.

In some embodiments, a thickness of the conductive layer is 0.5 µm to 5 µm. The thickness of the conductive layer in this range can make the composite current collector maintain an appropriate weight and thickness on the basis of providing appropriate conduction. Optionally, the thickness of the conductive layer may be 0.5 µm, 0.8 µm, 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, 4.2 µm, 4.5 µm, 4.8 µm, 5 µm, or the like. Optionally, the conductive layer includes a metal material. Optionally, the metal material includes at least one of copper, aluminum, nickel, titanium, platinum, iron, cobalt, chromium, tungsten, molybdenum, magnesium, lead, indium, and tin.

In some embodiments, an elastic modulus of the composite current collector is 7.2 gigapascals (GPa) to 9.0 GPa. The elastic modulus of the composite current collector in this range can reduce the risk of wrinkling during processing. Optionally, the elastic modulus of the composite current collector may be 7.2 GPa, 7.5 GPa, 7.8 GPa, 8 GPa, 8.2 GPa, 8.5 GPa, 8.8 GPa, 9 GPa, or the like.

Another embodiment of this application provides an electrode plate. The electrode plate includes the foregoing composite current collector. It can be understood that the electrode plate may be a positive electrode plate or a negative electrode plate.

Another embodiment of this application provides a secondary battery. The secondary battery includes the foregoing electrode plate.

Another embodiment of this application provides an electric apparatus. The electric apparatus includes at least one of the foregoing composite current collector, the foregoing electrode plate, and the foregoing secondary battery.

The secondary battery and electric apparatus of this application are described below with appropriate reference to the drawings.

Typically, a secondary battery includes a positive electrode plate, a negative electrode plate, an electrolyte, and a separator. During charging and discharging of the battery, active ions intercalate and deintercalate back and forth between the positive electrode plate and the negative electrode plate. The electrolyte serves to conduct ions between the positive electrode plate and the negative electrode plate. The separator is disposed between the positive electrode plate and the negative electrode plate, primarily to prevent short-circuiting between the positive and negative electrodes while allowing ions to pass through.

### Positive electrode plate

The positive electrode plate includes a positive electrode current collector and a positive electrode film layer disposed on at least one surface of the positive electrode current collector, where the positive electrode film layer includes a positive electrode active material.

In a non-limiting example, the positive electrode current collector has two opposite surfaces in its thickness direction, and the positive electrode active material layer is disposed on either one or both of the two opposite surfaces of the positive electrode current collector.

In some embodiments, the positive electrode current collector may be a metal foil or a composite current collector. For example, as a metal foil, aluminum foil may be used. The composite current collector may be the composite current collector described above. The composite current collector may also include a polymer material substrate and a metal layer formed on at least one surface of the polymer material substrate. The composite current collector may be obtained by forming a metal material on a polymer material substrate. Non-limiting examples of the metal material in the positive electrode current collector may include one or more of aluminum, aluminum alloy, nickel, nickel alloy, titanium, titanium alloy, silver, and silver alloy. Non-limiting examples of the polymer material substrate in the positive electrode current collector may include one or more of substrates such as polypropylene (PP), polyethylene terephthalate (PET), polybutylene terephthalate (PBT), polystyrene (PS), and polyethylene (PE).

In some embodiments, the positive electrode active material may be a positive electrode active material well known in the art for batteries. In a non-limiting example, the positive electrode active material may include one or more of the following materials: lithium-containing phosphates with an olivine structure, lithium transition metal oxides, and their respective modified compounds. However, this application is not limited to these materials, and other conventional materials that can be used as positive electrode active materials for batteries may also be used. One of these positive electrode active materials may be used alone, or two or more of them may be used in combination. Examples of the lithium transition metal oxides may include, but are not limited to, one or more of lithium cobalt oxide (for example, LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Non-limiting examples of the lithium-containing phosphates with an olivine structure may include, but are not limited to, one or more of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Non-limiting examples of the lithium cobalt oxide may include LiCoO₂. Non-limiting examples of the lithium nickel oxide may include LiNiO₂. Non-limiting examples of the lithium manganese oxide may include LiMnO₂, LiMn₂O₄, and the like. Non-limiting examples of the lithium nickel cobalt manganese oxide may include LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), and the like. Non-limiting examples of the lithium nickel cobalt aluminum oxide may include LiNi_{0.8}Co_{0.15}Al_{0.05}O₂.

In some embodiments, the positive electrode active material layer further optionally includes a binder. In a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode active material layer further optionally includes a conductive agent. In a non-limiting example, the conductive agent may include one or more of superconducting carbon, acetylene black, carbon black, Ketjen black, carbon dots, carbon nanotubes, graphene, and carbon nanofibers.

In some embodiments, the positive electrode plate may be prepared by the following method: the foregoing components for preparing the positive electrode plate, such as the positive electrode active material, conductive agent, binder, and any other components, are dispersed in a solvent to form a positive electrode slurry; and the positive electrode slurry is applied on at least one surface of the positive electrode current collector, followed by drying and cold pressing to obtain a positive electrode plate. In terms of type, the solvent may be selected from, but is not limited to, any of the solvents mentioned in the foregoing embodiments, such as N-methylpyrrolidone (NMP). The positive electrode slurry may be applied on a single surface of the positive electrode current collector or on two surfaces of the positive electrode current collector. The positive electrode slurry may be applied on a single surface of the positive electrode current collector or on two surfaces of the positive electrode current collector. A solid content of the positive electrode slurry may be 40 weight% (wt%) to 80wt%. A viscosity of the positive electrode slurry at room temperature may be adjusted to 5000 millipascal-second (mPa·s) to 25000 mPa·s. When the positive electrode slurry is applied, based on a weight measured after drying (excluding the weight of the solvent), a coating weight per unit area may be 15 milligrams per square centimeter (mg/cm²) to 35 mg/cm². A compacted density of the positive electrode plate may be 3.0 grams per cubic centimeter (g/cm³) to 3.6 g/cm³, optionally 3.3 g/cm³ to 3.5 g/cm³.

### Negative electrode plate

The negative electrode plate includes a negative electrode current collector and a negative electrode active material layer disposed on at least one surface of the negative electrode current collector, where the negative electrode active material layer includes a negative electrode active material.

In a non-limiting example, the negative electrode current collector has two opposite surfaces in its thickness direction, and the negative electrode active material layer is disposed on either one or both of the two opposite surfaces of the negative electrode current collector.

In some embodiments, the negative electrode current collector may be a metal foil or a composite current collector. For example, as a metal foil, copper foil may be used. The composite current collector may be the composite current collector described above. The composite current collector may also include a polymer material substrate and a metal layer formed on at least one surface of the polymer material substrate. The composite current collector may be obtained by forming a metal material on a polymer material substrate. Non-limiting examples of the metal material in the negative electrode current collector may include one or more of copper, copper alloy, nickel, nickel alloy, titanium, titanium alloy, silver, and silver alloy. Non-limiting examples of the polymer material substrate in the negative electrode current collector may include one or more of substrates such as polypropylene (PP), polyethylene terephthalate (PET), polybutylene terephthalate (PBT), polystyrene (PS), and polyethylene (PE).

In some embodiments, the negative electrode active material may be a negative electrode active material well known in the art for batteries. In a non-limiting example, the negative electrode active material may include one or more of the following materials: artificial graphite, natural graphite, soft carbon, hard carbon, silicon-based materials, tin-based materials, and lithium titanate. Silicon-based materials may include one or more of elemental silicon, silicon oxide compounds, silicon-carbon composites, silicon-nitrogen composites, and silicon alloys. Tin-based materials may include one or more of elemental tin, tin oxide compounds, and tin alloys. However, this application is not limited to these materials, and other conventional materials that can be used as negative electrode active materials for batteries may also be used. One of these negative electrode active materials may be used alone, or two or more of them may be used in combination.

In some embodiments, the negative electrode active material layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may include one or more of superconducting carbon, acetylene black, carbon black, Ketjen black, carbon dots, carbon nanotubes, graphene, and carbon nanofibers.

In some embodiments, the negative electrode active material layer further optionally includes other additives, such as a thickener (for example, sodium carboxymethyl cellulose (CMC-Na)).

In some embodiments, the negative electrode plate may be prepared by the following method: the components for preparing the negative electrode plate, such as the negative electrode active material, conductive agent, binder, and any other components, are dispersed in a solvent (for example, deionized water as a non-limiting example) to form a negative electrode slurry; and the negative electrode slurry is applied on at least one surface of the negative electrode current collector, followed by processes such as drying and cold pressing to obtain a negative electrode plate. The negative electrode slurry may be applied on a single surface of the negative electrode current collector or on two surfaces of the negative electrode current collector. A solid content of the negative electrode slurry may be 40wt% to 60wt%. A viscosity of the negative electrode slurry at room temperature may be adjusted to 2000 mPa·s to 10000 mPa·s. When the negative electrode slurry is applied, based on a weight measured after drying (excluding the weight of the solvent), a coating weight per unit area may be 75 grams per square meter (g/m²) to 220 g/m². A compacted density of the negative electrode plate may be 1.0 g/cm³ to 1.8 g/cm³.

### Electrolyte

The electrolyte serves to conduct ions between the positive electrode plate and the negative electrode plate. The type of the electrolyte is not particularly limited in this application, which can be selected according to requirements. For example, the electrolyte may be in liquid state, gel state, or all-solid-state.

In some embodiments, the electrolyte is a liquid electrolyte. The liquid electrolyte includes an electrolytic salt and a solvent.

In some embodiments, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro(oxalato)phosphate (LiDFOP), and lithium tetrafluoro(oxalato)phosphate (LiTFOP).

In some embodiments, the solvent may include one or more of ethylene carbonate (EC, 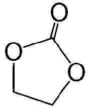 ), propylene carbonate (PC, 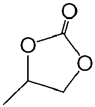 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate 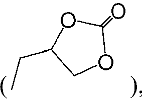 fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additive may include a negative electrode film-forming additive, and a positive electrode film-forming additive, and may further include an additive that can improve certain performance of the battery, such as an additive for improving overcharge performance of the battery, or an additive for improving high-temperature or low-temperature performance of the battery.

In some embodiments, the additive in the liquid electrolyte may include, but is not limited to, one or more of fluoroethylene carbonate (FEC), difluoroethylene carbonate (DFEC), and trifluoromethyl ethylene carbonate (TFPC).

### Separator

In some embodiments, the secondary battery further includes a separator. The type of the separator is not particularly limited in this application, and any well-known porous structure separator with good chemical stability and mechanical stability may be used.

In some embodiments, the material of the separator may include one or more of glass fibers, non-woven fabric, polyethylene, polypropylene, and polyvinylidene fluoride. The separator may be a single-layer film or a multilayer composite film, which is not particularly limited. When the separator is a multilayer composite film, the materials of the layers may be the same or different, which are not particularly limited.

In some embodiments, a thickness of the separator is 6 µm to 40 µm, optionally 12 µm to 20 µm.

In some embodiments, the positive electrode plate, negative electrode plate, and separator may be made into an electrode assembly through a winding process or a lamination process.

In some embodiments, the secondary battery may include an outer package. The outer package may be configured to encapsulate the electrode assembly and electrolyte.

In some embodiments, the outer package of the secondary battery may be a hard shell, such as a hard plastic shell, an aluminum shell, or a steel shell. The outer package of the secondary battery may alternatively be a soft pack, such as a pouch-type soft pack. The material of the soft pack may be plastic. Further, non-limiting examples of plastic may include one or more of polypropylene, polybutylene terephthalate, and polybutylene succinate.

The secondary battery includes at least one battery cell. The secondary battery may include one or more battery cells.

In this application, unless otherwise specified, a "battery cell" refers to a basic unit capable of realizing mutual conversion between chemical energy and electrical energy. Further, the battery cell typically includes at least a positive electrode plate, a negative electrode plate, and an electrolyte. During charging and discharging of the battery, active ions intercalate and deintercalate back and forth between the positive electrode plate and the negative electrode plate. The electrolyte serves to conduct active ions between the positive electrode plate and the negative electrode plate.

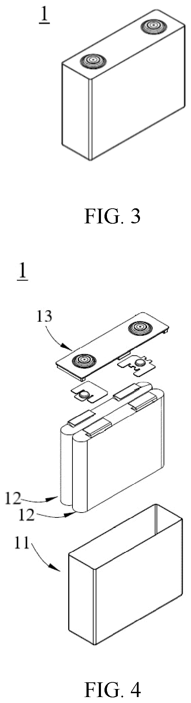

The battery cell is not limited to any particular shape in this application, and may be cylindrical, prismatic, or of any other shape. For example, FIG. 3 shows a secondary battery 1 of a prismatic structure as an example.

In some embodiments, referring to FIG. 4, the outer package may include a shell 11 and a cover plate 13. The shell 11 may include a bottom plate and side plates connected to the bottom plate, with the bottom plate and side plates enclosing an accommodating cavity. The shell 11 has an opening communicating with the accommodating cavity, and the cover plate 13 can cover the opening to seal the accommodating cavity. The positive electrode plate, negative electrode plate, and separator can be made into an electrode assembly 12 through a winding process or a lamination process. The electrode assembly 12 is encapsulated in the accommodating cavity. The electrolyte infiltrates the electrode assembly 12. The secondary battery 1 may include one or more electrode assemblies 12, which can be selected by those skilled in the art according to actual needs.

The secondary battery may be a battery module or a battery pack.

The battery module includes at least one battery cell. The battery module may include one or more battery cells, and those skilled in the art can select an appropriate number according to the application and capacity of the battery module.

In the battery module, the multiple battery cells may be arranged sequentially along a length direction of the battery module. Certainly, the battery cells may be arranged in any other manner. Further, the multiple battery cells can be fixed by fasteners.

Optionally, the battery module may further include a housing with an accommodating space, and the multiple battery cells are accommodated in the accommodating space.

In some embodiments, the battery module may alternatively be assembled into a battery pack, the battery pack may include one or more battery modules, and those skilled in the art can select an appropriate number according to the application and capacity of the battery pack.

The battery pack may include a battery box and multiple battery modules disposed in the battery box. The battery box includes an upper box body and a lower box body, where the upper box body can cover the lower box body to form a closed space for accommodating the battery modules. The multiple battery modules may be arranged in any manner in the battery box.

Additionally, this application further provides an electric apparatus. The electric apparatus includes the secondary battery provided by this application. The secondary battery may be used as a power source for the electric apparatus or an energy storage unit for the electric apparatus. The electric apparatus may include, but is not limited to, a mobile device, an electric vehicle, an electric train, a ship, a satellite, and an energy storage system. The mobile device may be, for example, a mobile phone, a laptop, or the like. The electric vehicle may be, for example, a battery electric vehicle, a hybrid electric vehicle, a plug-in hybrid electric vehicle, an electric bicycle, an electric scooter, an electric golf cart, an electric truck, or the like, but is not limited thereto.

A secondary battery may be selected for an electric apparatus according to the usage requirements of the electric apparatus.

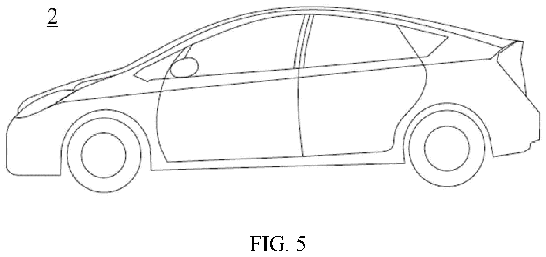

FIG. 5 shows an electric apparatus 2 as an example. The electric apparatus is a battery electric vehicle, a hybrid electric vehicle, a plug-in hybrid electric vehicle, or the like. To meet the high power and high energy density requirements of the electric apparatus on secondary batteries, a battery pack or battery module may be used.

In another example, the apparatus may be a mobile phone, a tablet computer, a laptop, or the like. Such apparatus is typically required to be light and thin and may use a secondary battery as a power source.

To make the technical problems solved, the technical solutions, and the beneficial effects of this application clearer, this application is further described in detail below with reference to embodiments and drawings. It is apparent that the described embodiments are only some rather than all embodiments of this application. The description of at least one exemplary embodiment is merely illustrative and in no way serves as any limitation on this application or the application thereof. Based on the embodiments in this application, all other embodiments obtained by those of ordinary skill in the art without creative efforts fall within the protection scope of this application.

Technologies or conditions not specified in the embodiments are carried out in accordance with the technologies or conditions described in the literature in the art or in accordance with product instructions. Reagents or instruments used without specifying the manufacturer are all conventional products commercially available.

### Example 1

The composite current collector in this example included a substrate layer, a first filler, a bonding layer, and a conductive layer. The bonding layer was located between the substrate layer and the conductive layer, one end of the first filler was embedded in the substrate layer, and the other end of the first filler was embedded in the bonding layer. The substrate layer was made of PET with a thickness of 6 µm. The first filler was made of alumina with Dᵥ50 of 300 nm. The bonding layer was made of modified polypropylene, and a thickness of the bonding layer was 1 µm. The conductive layer was made of aluminum, and a thickness of the conductive layer was 1 µm.

A preparation method of the composite current collector in this example included the following steps.

S101: A metal conductive layer was subjected to a passivation treatment to obtain a chromate passivation layer on a surface of the conductive layer.

S102: A surface of the substrate layer was thermally treated, a first filler was transferred to the surface of the substrate layer, and a pressure was applied to embed one end of the first filler into the substrate layer.

S103: A bonding layer slurry was applied on the surface of the substrate layer, the metal conductive layer was transferred to a surface of the slurry, and curing was performed at 80°C for 72 h.

S104: The metal conductive layer was subjected to an etching thinning treatment to obtain a conductive layer with a target thickness.

### Example 2

This example differed from Example 1 in that the composite current collector further included a second filler; the second filler was located inside the bonding layer; the second filler included a sodium chloride flame-retardant filler; and during preparation of the composite current collector, the second filler was dispersed in the slurry so that the second filler was located inside the bonding layer in the composite current collector.

### Examples 3 to 16

Examples 3 to 16 differed from Example 2 in that the substrate layer was provided with a through-hole channel. Specific parameters are shown in Table 1. During preparation of the composite current collector, the substrate layer was first drilled to obtain a through-hole channel, and then the operations of S102 to S104 were performed.

### Comparative Example 1

This comparative example differed from Example 1 in that the composite current collector did not contain a first filler.

**Table 1**

| | Dᵥ50 of first filler | Dᵥ50 of second filler | Spacing between first fillers | Depth of embedded portion of first filler | Mass percentage of second filler | Mass percentage of second flame-retardant filler | Presence of hole channel | Hole diameter of hole channel | Spacing between hole channels |
|---|---|---|---|---|---|---|---|---|---|
| Example 1 | 300 | / | 30 | 250 | / | / | No | / | / |
| Example 2 | 300 | 100 | 30 | 250 | 30% | 40% | No | / | / |
| Example 3 | 150 | 50 | 5 | 100 | 20% | 30% | Yes | 30 | 5 |
| Example 4 | 200 | 80 | 10 | 150 | 30% | 35% | Yes | 50 | 10 |
| Example 5 | 300 | 100 | 30 | 250 | 30% | 40% | Yes | 100 | 30 |
| Example 6 | 500 | 120 | 40 | 250 | 50% | 45% | Yes | 150 | 40 |
| Example 7 | 1000 | 130 | 50 | 500 | 30% | 50% | Yes | 200 | 50 |
| Example 8 | 1500 | 150 | 30 | 800 | 30% | 40% | Yes | 300 | 30 |
| Example 9 | 300 | 100 | 100 | 250 | 30% | 40% | Yes | 100 | 30 |
| Example 10 | 300 | 100 | 2 | 250 | 30% | 40% | Yes | 100 | 30 |
| Example 11 | 300 | 100 | 30 | 0 | 30% | 40% | Yes | 100 | 30 |
| Example 12 | 3000 | 100 | 30 | 2000 | 30% | 40% | Yes | 100 | 30 |
| Example 13 | 300 | 100 | 30 | 250 | 5% | 40% | Yes | 100 | 30 |
| Example 14 | 300 | 100 | 30 | 250 | 70% | 40% | Yes | 100 | 30 |
| Example 15 | 300 | 100 | 30 | 250 | 30% | 40% | Yes | 1000 | 30 |
| Example 16 | 300 | 100 | 30 | 250 | 30% | 40% | Yes | 100 | 100 |
| Comparative Example 1 | None | None | None | None | None | None | None | None | None |

In Table 1, the Dᵥ50 of the first filler is measured in nm. The Dᵥ50 of the second filler is measured in nm. The spacing between first fillers refers to the spacing between adjacent first fillers, measured in mm. The depth of the embedded portion of the first filler refers to the depth of the portion of the first filler embedded in the substrate layer, measured in nm. The mass percentage of the second filler refers to the mass percentage of the second filler based on the total mass of the first filler and the second filler. The mass percentage of the second flame-retardant filler refers to the mass percentage of the second flame-retardant filler in the second filler. The presence of a hole channel indicates whether a through-hole channel is provided in the substrate layer, where "Yes" indicates that the substrate layer is provided with a through-hole channel, and "No" indicates that the substrate layer is not provided with a hole channel, neither a through-hole channel nor a blind-hole channel. The hole diameter of the hole channel refers to the hole diameter of the through-hole channel, measured in µm. The spacing between hole channels refers to the spacing between adjacent through-hole channels, measured in mm.

### Battery preparation

### (1) Preparation of positive electrode plate

LiNi_{0.8}Co_{0.1}Mn_{0.1}O₂ and LiNi_{0.5}Co_{0.2}Mn_{0.3}O₂ were mixed at a ratio of 17:3 to form a positive electrode active material. The positive electrode active material, superconducting carbon black SP serving as a conductive agent, and polyvinylidene fluoride (PVDF) serving as a binder were dispersed at a mass ratio of 95:3:2 in N-methylpyrrolidone (NMP) serving as a solvent and mixed uniformly to obtain a positive electrode slurry; the positive electrode slurry was uniformly applied on a composite current collector aluminum foil; and the composite current collector aluminum foil was dried at 85 degrees Celsius (°C), cold-pressed, and then subjected to die-cutting and slitting to obtain a positive electrode plate. The composite current collector was the composite current collector in the Examples and comparative example.

### (2) Preparation of negative electrode plate

A negative electrode active material graphite, a conductive agent acetylene black, a thickener sodium carboxymethyl cellulose, and a binder styrene-butadiene rubber at a mass ratio of 96:2:1:1 were added to water which served as a solvent and were mixed uniformly to obtain a negative electrode slurry. The negative electrode slurry was uniformly applied on the negative electrode current collector, dried at 85°C, and then cold-pressed at a pressure of 40 tons, where the cold pressing was performed using a cylindrical cold-pressing roller at a cold-pressing speed of 20 meters per minute (m/min) and a temperature of 25°C to obtain a negative electrode plate.

### (3) A polypropylene separator was used as the separator.

### (4) Preparation of electrolyte

LiPF₆ was dissolved in a solvent mixture of ethylene carbonate, dimethyl carbonate, and ethyl methyl carbonate (a volume ratio of the ethylene carbonate, dimethyl carbonate, and ethyl methyl carbonate was 1:2:1), and an additive fluoroethylene carbonate (FEC) was added to obtain an electrolyte. A concentration of the LiPF₆ in the electrolyte was 1 mole per liter (mol/L), and a mass percentage of the FEC was 5wt%.

### Test example

(1) The elastic modulus of the composite current collector was tested by the following method: the current collector was cut into a strip of 15 mm × 150 mm, a tensile test was performed using a universal tensile machine with a gauge length of 50 mm and a tensile speed of 50 millimeters per minute (mm/min) until fracture occurred in the test; and a chord slope method was used for calculation based on a chord slope corresponding to a strain of 0.05% to 0.5%. The results are shown in Table 2.
(2) Whether wrinkling occurred in test was tested by the following method: a four-line coating design was adopted, and the coating process was observed to check whether a tab wrinkled and whether a tab position bulged during winding, where wrinkling was considered to occur if there was a bulge higher than 1 mm. The results are shown in Table 2.
(3) A bonding force was tested by the following method: a sample and a non-corona surface of an ethylene-acrylic acid copolymer (EAA) film were laminated, and then the EAA film was covered with 12 µm thick PET. A resulting product was placed on a heat sealing machine for lamination at a temperature of 120°C and a pressure of 0.2 megapascal (MPa). The laminated sample was cut into a sample with a length of 100 mm and a width of 20 mm, and a non-laminated surface of the conductive layer was adhered to a steel plate using a 3M double-sided tape. The sample was clamped in a fixture of a tensile machine with a spacing of 50 mm, and a 180°C peel test was performed at a speed of 300 mm/min. A peel force was read and converted to the unit of newton per meter (N/m). Five parallel samples were tested, and ultimately an average peel force was taken. Average peel force=sum of peel forces of five test samples/5. The results are shown in Table 2.
(4) A DCR of the battery was tested by the following method: a battery cell was adjusted to 50% SOC, discharged at a rate of 4 coulombs (C) (corresponding to a discharge current of I) for 30 seconds (s), and a voltage difference ΔV before and after the 30s of discharge was recorded. The DCR corresponding to 50% SOC was calculated according to the following formula: DCR=ΔV/I, to obtain DCR data of each battery cell. The results are shown in Table 2.
(5) Cycling performance of the battery was tested by the following method: the battery cell was subjected to a cycle including charge at a rate of 1C and discharge at the rate of 1C at a high temperature of 60°C until a capacity decayed to 80% of an initial capacity, and a corresponding number of cycles was recorded at that moment, which corresponded to the cycling performance of the battery. The results are shown in Table 2.
(6) A needle penetration pass rate of the battery was tested by the following method: a cell was fully charged and then fixed to a fixture, and a high temperature resistant steel needle with a diameter of 3 mm penetrated through the cell at a speed of 80 millimeters per second (mm/s); if smoke or fire occurred, or an explosion-proof valve was opened after the penetration of the needle, it was determined that the battery did not pass the needle penetration test; if no smoke and no fire occurred, and the explosion-proof valve was not opened after the penetration of the needle, it was determined that the battery had passed the needle penetration test. A total of 5 parallel sample cells were tested, and if the number of cells passing the needle penetration test was x, the pass rate was x/5*100%. The results are shown in Table 2.

**Table 2**

| | Elastic modulus | Presence of wrinkling | Bonding force | DCR | Number of cycles at 60°C | Needle penetration pass rate |
|---|---|---|---|---|---|---|
| Example 1 | 7.6 | No | 191 | 1.61 | 475 | 80% |
| Example 2 | 8.1 | No | 191 | 1.59 | 485 | 100% |
| Example 3 | 8.5 | No | 230 | 1.51 | 503 | 100% |
| Example 4 | 8.4 | No | 250 | 1.50 | 505 | 100% |
| Example 5 | 9.0 | No | 270 | 1.49 | 501 | 100% |
| Example 6 | 8.5 | No | 290 | 1.48 | 502 | 100% |
| Example 7 | 8.3 | No | 310 | 1.49 | 506 | 100% |
| Example 8 | 8.4 | No | 250 | 1.50 | 504 | 100% |
| Example 9 | 7.3 | No | 215 | 1.63 | 473 | 100% |
| Example 10 | 7.3 | No | 213 | 1.64 | 471 | 100% |
| Example 11 | 7.2 | No | 214 | 1.79 | 387 | 100% |
| Example 12 | 7.3 | No | 187 | 1.65 | 415 | 100% |
| Example 13 | 7.5 | No | 210 | 1.48 | 493 | 80% |
| Example 14 | 7.6 | No | 185 | 1.80 | 458 | 100% |
| Example 15 | 7.3 | No | 210 | 1.75 | 468 | 100% |
| Example 16 | 7.7 | No | 195 | 1.73 | 478 | 100% |
| Comparative Example 1 | 5.4 | Yes | 105 | 2.21 | 305 | 0% |

In Table 2, the elastic modulus is measured in GPa. The bonding force is measured in N/m. The number of cycles is measured in number. The DCR is measured in milliohm (mΩ).

From Table 1 and Table 2, it can be seen that the elastic modulus of the composite current collectors in Examples 1 to 16 is higher than that of the composite current collector in Comparative Example 1, indicating that the addition of the first filler is conducive to improving the elastic modulus of the composite current collector.

From Example 1 and Example 2, it can be seen that the addition of the second filler is conducive to improving the elastic modulus of the composite current collector and the safety performance of the cell. The second filler can improve the elastic modulus of the bonding layer, thereby improving the elastic modulus of the current collector. In addition, the flame-retardant component in the second filler can improve the safety performance of the cell.

From Example 2 and Example 3, it can be seen that the provision of the hole channel at the substrate layer is conducive to improving the elastic modulus and bonding force of the composite current collector. The presence of the hole channel, on the one hand, can allow bubbles at an interface between the bonding layer and the substrate layer to be discharged from the hole channel during the preparation of the current collector, making the bonding layer and the substrate layer be bonded more closely, thereby improving the bonding force; on the other hand, the bonding layer can better leverage the bonding at the hole channel, and can also improve the elastic modulus to some extent in consideration of the factor of the improvement of the bonding force.

From Examples 5, 9, and 10, it can be seen that the spacing between adjacent first fillers in an appropriate range is conducive to further improving the elastic modulus of the composite current collector.

From Examples 5, 11, and 12, it can be seen that when the depth of the portion of the first filler embedded in the substrate layer in an appropriate range is conducive to further improving the elastic modulus of the composite current collector. Furthermore, when the depth of the portion of the first filler embedded in the substrate layer is large, the corresponding Dᵥ50 of the first filler is large, which may reduce the elastic modulus of the composite current collector.

From Examples 5, 13, and 14, it can be seen that the mass percentage of the second filler in an appropriate range is conducive to further improving the elastic modulus of the composite current collector. In addition, when the mass percentage of the second filler is small, an amount of the second flame-retardant filler used is reduced, which may reduce the needle penetration pass rate of the battery.

From Example 5 and Example 15, it can be seen that a large hole diameter of the hole channel may reduce the elastic modulus of the composite current collector.

From Example 5 and Example 16, it can be seen that a large spacing between the hole channels may reduce the elastic modulus of the composite current collector.

The various technical features of the above embodiments can be arbitrarily combined. To keep the description concise, not all possible combinations of the various technical features in the above embodiments are described. However, as long as there is no contradiction in the combinations of these technical features, they are all considered to fall within the scope described in this specification.

The above embodiments present only a few embodiments of this application, with relatively specific and detailed descriptions, but they are not to be construed as limiting the scope of the patent of the present invention. It should be noted that, for those of ordinary skill in the art, several variations and improvements can be made without departing from the concept of this application, all of which fall within the protection scope of this application. Therefore, the protection scope of the patent of this application is subject to the appended claims.

## Claims

1. A composite current collector, comprising a substrate layer, a first filler, a bonding layer, and a conductive layer; wherein the bonding layer is located between the substrate layer and the conductive layer, one end of the first filler is embedded in the substrate layer, the other end of the first filler is embedded in the bonding layer, a hardness of the first filler is greater than a hardness of the substrate layer, and the hardness of the first filler is greater than a hardness of the bonding layer.

2. The composite current collector according to claim 1, wherein a depth of a portion of the first filler embedded in the substrate layer is 100 nm to 800 nm.

3. The composite current collector according to claim 1 or 2, wherein multiple first fillers are provided, and the multiple first fillers are spaced apart.

4. The composite current collector according to claim 3, wherein a spacing between adjacent first fillers is 5 mm to 50 mm.

5. The composite current collector according to any one of claims 1 to 4, wherein Dᵥ50 of the first filler is 150 nm to 1500 nm.

6. The composite current collector according to any one of claims 1 to 5, wherein the Dᵥ50 of the first filler is 200 nm to 1000 nm.

7. The composite current collector according to any one of claims 1 to 6, wherein the first filler comprises at least one of alumina, silicon carbide, silicon nitride, silicon oxide, calcium oxide, boehmite, titanium dioxide, zirconium dioxide, magnesium oxide, zinc oxide, barium sulfate, boron carbide, and a first flame-retardant filler.

8. The composite current collector according to claim 7, wherein the first flame-retardant filler comprises at least one of sodium chloride, sodium acetate, zinc borate, ammonium molybdate, zirconium phosphate, and antimony oxide.

9. The composite current collector according to any one of claims 1 to 8, wherein the composite current collector further comprises a second filler, the second filler is located inside the bonding layer, a hardness of the second filler is greater than the hardness of the substrate layer, the hardness of the second filler is greater than the hardness of the bonding layer, and Dᵥ50 of the second filler is less than the Dᵥ50 of the first filler.

10. The composite current collector according to claim 9, wherein the Dᵥ50 of the second filler is 50 nm to 150 nm.

11. The composite current collector according to claim 9 or 10, wherein a mass ratio of the second filler to the first filler is (20 to 50):(50 to 80).

12. The composite current collector according to any one of claims 9 to 11, wherein the second filler comprises at least one of alumina, silicon carbide, silicon nitride, silicon oxide, calcium oxide, boehmite, titanium dioxide, zirconium dioxide, magnesium oxide, zinc oxide, barium sulfate, boron carbide, and a second flame-retardant filler.

13. The composite current collector according to claim 12, wherein a mass percentage of the second flame-retardant filler in the second filler is 30% to 50%.

14. The composite current collector according to claim 12 or 13, wherein the second flame-retardant filler comprises at least one of sodium chloride, sodium acetate, zinc borate, ammonium molybdate, zirconium phosphate, and antimony oxide.

15. The composite current collector according to any one of claims 1 to 14, wherein the bonding layer comprises a binder.

16. The composite current collector according to claim 15, wherein the binder comprises one or more of isocyanate, polyester polyol, polyurethane, epoxy resin, polyacrylate, polyvinyl acetate, unsaturated polyester, phenolic resin, urea-formaldehyde resin, modified polyolefin resin, silicone resin, ethylene-acrylic acid copolymer, ethylene-vinyl acetate copolymer, ethylene-vinyl alcohol copolymer, acrylic resin, polycarbonate, and polyamide.

17. The composite current collector according to any one of claims 1 to 16, wherein the substrate layer is provided with a hole channel, and the bonding layer is embedded in the hole channel.

18. The composite current collector according to claim 17, wherein a hole diameter of the hole channel is 30 µm to 500 µm.

19. The composite current collector according to claim 17 or 18, wherein multiple hole channels are provided, and the multiple hole channels are spaced apart.

20. The composite current collector according to claim 19, wherein a spacing between adjacent hole channels is 5 mm to 50 mm.

21. The composite current collector according to any one of claims 17 to 20, wherein the hole channels comprise at least one of through-hole channels and blind-hole channels.

22. The composite current collector according to claim 21, wherein a depth of the blind-hole channel is 50 nm to 1200 nm.

23. The composite current collector according to any one of claims 1 to 22, wherein the composite current collector further comprises a passivation layer, and the passivation layer is located on a surface of the conductive layer.

24. The composite current collector according to claim 23, wherein the passivation layer comprises at least one of chromate, phosphate, alumina, silicon dioxide, and silicon nitride.

25. The composite current collector according to any one of claims 1 to 24, wherein a thickness of the substrate layer is 2 µm to 15 µm.

26. The composite current collector according to any one of claims 1 to 25, wherein a thickness of the bonding layer is 0.5 µm to 3 µm.

27. The composite current collector according to any one of claims 1 to 26, wherein a thickness of the conductive layer is 0.5 µm to 5 µm.

28. The composite current collector according to any one of claims 1 to 27, wherein an elastic modulus of the composite current collector is 7.2 GPa to 9.0 GPa.

29. An electrode plate, comprising the composite current collector according to any one of claims 1 to 28.

30. A secondary battery, comprising the electrode plate according to claim 29.

31. An electric apparatus, comprising at least one of the composite current collector according to any one of claims 1 to 28, the electrode plate according to claim 29, and the secondary battery according to claim 30.
